# EUROPEAN PATENT APPLICATION

(11) **EP 4 276 938 A1**
(43) Date of publication of application: **15.11.2023**
(21) Application number: 22896141.3
(22) Date of filing: 18.11.2022
(51) Int. Cl.: H01M 4/134, H01M 4/133, H01M 4/131, H01M 4/36, H01M 4/38, H01M 4/587, H01M 4/525, H01M 4/505, H01M 10/052

(54) **LITHIUM SECONDARY BATTERY**

(30) Priority: 19.11.2021 KR 20210160765
(71) Applicant: LG Energy Solution, Ltd., Seoul 07335 (KR)
(72) Inventor: SON, Jongin, Daejeon 34122 (KR); KIM, Jeeeun, Daejeon 34122 (KR); CHOI, Jeong Eun, Daejeon 34122 (KR)
(74) Representative: Hoffmann Eitle
(86) International application number: PCT/KR2022/018330
(87) International publication number: WO 2023/090944

(57) **Abstract**

A lithium secondary battery includes: a positive electrode; a negative electrode; a separator provided between the positive and negative electrodes; and an electrolyte. The positive electrode includes a positive electrode current collector and a positive electrode active material provided on the positive electrode current collector. The negative electrode includes a negative electrode current collector and a negative electrode active material layer provided on the negative electrode current collector. The positive electrode active material layer includes a positive electrode active material including a lithium composite transition metal compound which includes nickel, cobalt and manganese, where the nickel is in an amount from 80 mol% to 100 mol% among the metals except for lithium and is in the form of a single particle. The negative electrode active material layer includes a Si/C-based active material in an amount from 3 parts to 100 parts by weight of the entire negative electrode active material.

## Description

### [Technical Field]

This application claims priority to and the benefit of Korean Patent Application No. 10-2021-0160765 filed in the Korean Intellectual Property Office on November 19, 2021, the entire contents of which are incorporated herein by reference.

The present application relates to a lithium secondary battery.

### [Background Art]

Recently, with the rapid spread of electronic devices using batteries, including not only mobile phones, notebook-sized computers, and electric vehicles, but also power tools and cleaners, the demand for small and lightweight secondary batteries having relatively high capacity and/or high output is rapidly increasing. In particular, lithium secondary batteries are lightweight and have high energy density, and thus have attracted attention as driving power sources for electronic devices. Accordingly, research and development efforts to improve the performance of lithium secondary batteries have been actively conducted.

The lithium secondary battery generates electric energy by oxidation and reduction reactions during intercalation and deintercalation of lithium ions at a positive electrode and a negative electrode in a state in which an organic electrolytic solution or polymer electrolytic solution is filled between the positive electrode and the negative electrode, which are composed of active materials capable of intercalating and deintercalating lithium ions.

Lithium cobalt oxide (LiCoO₂), lithium nickel oxide (LiNiO₂), lithium manganese oxide (LiMnO₂, LiMn₂O₄, and the like), a lithium iron phosphate compound (LiFePO₄) and the like have been used as a positive electrode active material of a lithium secondary battery. Among them, lithium cobalt oxide (LiCoO₂) is widely used because of advantages of high operating voltage and excellent capacity characteristics, and is applied as a high voltage positive electrode active material. However, due to rising prices and an unstable supply of cobalt (Co), there is a limit to its large-scale usage as a power source in fields such as electric vehicles, so there is an emerging need for developing a positive electrode active material capable of replacing cobalt.

Accordingly, a nickel-cobalt-manganese-based lithium composite transition metal oxide (hereinafter simply referred to as 'NCM-based lithium composite transition metal oxide') in which a part of cobalt (Co) is substituted with nickel (Ni) and manganese (Mn) has been developed. Recently, research has been conducted to increase the capacity of NCM-based lithium composite transition metal oxide by increasing the content of Ni in the oxide. However, a Ni-rich positive electrode active material with a high nickel content has disadvantages such as increases in resistance, increases in gas generation due to deterioration in thermal stability, and increases in side reactions during electrochemical reactions.

Although graphite is commonly used as a negative electrode active material for a lithium secondary battery, it is difficult to increase the capacity of the lithium secondary battery because graphite has a small capacity per unit mass (372 mAh/g). Accordingly, in order to increase the capacity of a lithium secondary battery, negative electrode materials such as silicon, tin and oxides thereof have been developed as non-carbon-based negative electrode materials having higher energy density than graphite. However, although these non-carbon-based negative electrode materials have a large capacity, these materials have drawbacks in that the amount of lithium consumed is large and the irreversible capacity loss is large during the initial charging and discharging due to the low initial efficiency.

### [Detailed Description of the Invention]

### [Technical Problem]

In a lithium secondary battery designed in a limited space, optimum battery performance can be implemented by a specific combination of the type and the content of each component of the active material that constitutes the positive electrode and the negative electrode, thereby resulting in an improved lithium secondary battery.

### [Technical Solution]

An exemplary embodiment of the present disclosure provides a lithium secondary battery including a positive electrode, a negative electrode, a separator between the positive electrode and the negative electrode and an electrolyte,
in which the positive electrode includes a positive electrode current collector and a positive electrode active material layer provided on the positive electrode current collector and the negative electrode includes a negative electrode current collector and a negative electrode active material layer provided on the negative electrode current collector,
the positive electrode active material layer includes a positive electrode active material including a lithium composite transition metal compound which includes nickel, cobalt and manganese, includes nickel in an amount of 80 mol% or more and less than 100 mol% among the metals except for lithium and is in the form of a single particle, and
the negative electrode active material layer includes a Si/C-based active material in an amount of 3 parts by weight or more based on 100 parts by weight of the entire negative electrode active material.

### [Advantageous Effects]

According to the exemplary embodiments described in the present disclosure, the energy density of a lithium secondary battery designed in a limited space can be increased, the high output performance thereof can be improved, and the battery cycle performance can also be improved.

### [Brief Description of Drawings]

FIG. 1 illustrates a capacity-voltage graph of the batteries manufactured in Example 1 and Comparative Example 1.
FIG. 2 illustrates a capacity-volume resistivity graph of the powder resistance of compositions for forming a negative electrode active material layer, prepared in Example 2 and Comparative Example 2.
FIG. 3 illustrates a capacity-voltage graph of the charge and discharge characteristics of the batteries manufactured in Example 2 and Comparative Example 2.
FIG. 4 illustrates the XRD diffraction pattern of a Si/C-based active material.
FIG. 5 illustrates an SEM photograph of the Si/C-based active material.
FIG. 6 is a set of photographs illustrating a region where a component analysis is performed on the surface of the Si/C-based active material particles.

### DETAILED DESCRIPTION OF THE PREFERRED EMBODIMENTS

Hereinafter, the present invention will be described in more detail in order to help the understanding of the present invention. The present invention can be implemented in various different forms, and is not limited to the exemplary embodiments described herein. In this case, terms or words used in the specification and the claims should not be interpreted as being limited to typical or dictionary meanings and should be interpreted with a meaning and a concept that are consistent with the technical spirit of the present invention based on the principle that an inventor can appropriately define a concept of a term in order to describe his/her own invention in the best way.

In the present invention, the term "comprise," "include," or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

Further, where a part such as a layer is present "above" or "on" another part includes not only where the part is present "immediately above" another part, but also where still another part is present therebetween. Conversely, where a part is present "immediately above" another part means that no other part is present therebetween. In addition, being "above" or "on" a reference part means being located above or below the reference part, and does not necessarily mean being located "above" or "on" in the opposite direction of gravity.

A lithium secondary battery according to an exemplary embodiment of the present disclosure includes a positive electrode, a negative electrode, a separator between the positive electrode and the negative electrode and an electrolyte, the positive electrode includes a positive electrode current collector and a positive electrode active material layer provided on the positive electrode current collector, and the negative electrode includes a negative electrode current collector and a negative electrode active material layer provided on the negative electrode current collector. The positive electrode active material layer includes a positive electrode active material including a lithium composite transition metal compound which includes nickel, cobalt and manganese. Nickel is included in an amount of 80 mol% or more and less than 100 mol% among the metals except for lithium and is in the form of a single particle. The negative electrode active material layer includes a Si/C-based active material in an amount of 3 parts by weight or more based on 100 parts by weight of the entire negative electrode active material.

A lithium secondary battery needs to be designed for positioning within unique spaces for unique applications, and needs to be designed within a limited space for certain applications like electric vehicles. Although consumer demand for increase in energy density and improvement in high output performance is increasing, oftentimes there is an increase in the content of negative electrode materials to match the demand when a high-capacity positive electrode material is used, so that there is a limit to increasing the battery efficiency in a limited space. In addition, depending on the type of negative electrode material, it is necessary to design a positive electrode material having an efficiency that matches the efficiency of the negative electrode material.

In the exemplary embodiment of the present invention, a lithium composite transition metal oxide including nickel, cobalt and manganese is used as a positive electrode active material, but it is characterized in that nickel is included in a content of 80 mol% or more and less than 100 mol% among the metals except for lithium, and the form of a single particle is used. Simultaneously, by including a specific content of Si/C-based active material as a negative electrode active material, the irreversible capacity of the negative electrode may be minimized, and a positive electrode active material having a high nickel content may be applied without the need to reduce the efficiency of the positive electrode active material by additional positive electrode additives.

According to the exemplary embodiment of the present invention, the negative electrode active material layer includes a Si/C-based active material in an amount of 3 parts by weight or more based on 100 parts by weight of the entire negative electrode active material. When the Si/C-based active material is included in an amount of less than 3 parts by weight based on 100 parts by weight of the negative electrode active material, a potential problem exists in that the size of the battery may be increased by increasing the loading amount of the electrode active material in order to improve the capacity of the battery.

According to the exemplary embodiment of the present invention, the negative electrode active material layer includes a Si/C-based active material in an amount of 10 parts by weight or less based on 100 parts by weight of the entire negative electrode active material.

When the Si/C-based active material is included in an amount of more than 10 parts by weight based on 100 parts by weight of the negative electrode active material, there is a problem in that the service life characteristics of the battery deteriorate.

The negative electrode active material layer may include the Si/C-based active material in an amount of 3 parts by weight or more, 3.5 parts by weight or more, 4 parts by weight or more, 4.5 parts by weight or more, 5 parts by weight or more, or 5.5 parts by weight or more based on 100 parts by weight of the entire negative electrode active material. The negative electrode active material layer may include the Si/C-based active material in an amount of 10 parts by weight or less, 9.5 parts by weight or less, 9 parts by weight or less, 8.5 parts by weight or less, 8 parts by weight or less, 7.5 parts by weight or less, 7 parts by weight or less, 6.5 parts by weight or less, or 6 parts by weight or less based on 100 parts by weight of the entire negative electrode active material.

In an exemplary embodiment of the present disclosure, the Si/C-based active material has a capacity of 1,500 mAh/g to 3,000 mAh/g.

The Si/C-based active material may have a capacity of 1,500 mAh/g or more, 1,800 mAh/g or more, 2,100 mAh/g or more, 2,400 mAh/g or more, and 2,700 mAh/g or more. The Si/C-based active material may have a capacity of 3,000 mAh/g or less, 2,900 mAh/g or less, or 2,800 mAh/g or less.

When the above range is satisfied, a high-capacity battery may be made without increasing the loading amount of the electrode active material within a predetermined outer diameter of the battery when the negative electrode active material layer includes a Si/C based active material in an amount of 3 parts by weight or more based on 100 parts by weight of the entire negative electrode active material, so that a battery efficiency may be enhanced in a limited space.

That is, when the loading amount is increased, the output characteristics of the battery may deteriorate, so that the loading amount of the negative electrode may be lowered using a material having a high capacity per g in order to increase the capacity within a predetermined outer diameter of the battery, and a newly created space accordingly may be used to increase the loading amount of the positive electrode or may also be used to increase the capacity by increasing the pattern length.

The capacity of the Si/C-based active material may be measured from the discharge efficiency or discharge capacity of the negative electrode active material. That is, the discharge efficiency of the negative electrode active material may be measured as follows.

First, the negative electrode active material : a carboxymethyl cellulose (CMC) thickener : a styrene-butadiene rubber (SBR) binder polymer are added to water at a weight ratio of 97.5 : 1 : 1.5 to prepare a negative electrode slurry, and a copper foil is coated with the negative electrode slurry, punched and rolled so as to have an area of 1.4875 cm², and then dried to manufacture a negative electrode. An electrode assembly is manufactured by using lithium metal as a counter electrode together with the negative electrode and interposing a polypropylene separator therebetween. After 1 M LiPF₆ is added to an organic solvent so as to have a concentration of 1 wt% by mixing ethylene carbonate and ethylmethyl carbonate at a volume ratio of 3:7 and adding vinylene carbonate to prepare a non-aqueous electrolyte solution, a coin half cell (CHC) is manufactured by injecting the non-aqueous electrolyte solution into the electrode assembly.

When the negative electrode coin half cell (CHC) manufactured above is charged, a constant current of 0.005 V is applied at a rate of 0.2 C by a constant current constant voltage (CC-CV) method, and then the current is controlled by constant voltage at 0.005 V, and during discharge, the discharge efficiency may be measured by cutting-off at 1.5V by a constant current (CC) method at a rate of 0.2 C. The discharge efficiency may be calculated as discharge capacity/charge capacity*100.

According to another exemplary embodiment of the present disclosure, the lithium composite transition metal compound may include nickel, cobalt and manganese and include 80 mol% or more and less than 100 mol% of nickel among the metals except for lithium may include one or a mixture of two or more represented by the following Chemical Formula 1.

[Chemical Formula 1] LiₐNi_{1-b-c-d}Co_{b}Mn_{c}Q_{d}O_{2+δ}

In the chemical formula, Q is any one or more elements selected from the group consisting of Na, K, Mg, Ca, Sr, Ni, Co, Ti, Al, Si, Sn, Mn, Cr, Fe, V and Zr, 1≤a≤1.5, 0<b≤0.5, 0<c≤0.5, 0≤d≤0.1, 0 <b+c+d≤20, and - 0.1≤δ≤1.0.

In the lithium composite transition metal oxide of Chemical Formula 1, Li may be included in the content corresponding to a, that is, 1≤a≤1.5. There is a potential concern in that when a is less than 1, the capacity may be reduced, and when a exceeds 1.5, the particles may be sintered in the firing process, making it difficult to prepare a positive electrode active material. Considering the effect of improving the capacity characteristics of the positive electrode active material by controlling the content of Li and the balance of sinterability during the preparation of the active material, Li may be included more preferably in a content of 1.1≤a≤1.2.

In the lithium composite transition metal oxide of Chemical Formula 1, Ni may be included in a content corresponding to 1-(b+c+d), for example, 0.8≤1-(b+c+d) < 1. When the content of Ni in the lithium composite transition metal oxide of Chemical Formula 1 becomes a composition of 0.8 or more, a sufficient amount of Ni to contribute to charge/discharge may be secured to achieve a high capacity. Preferably, 1-(b+c+d) that is the content of Ni may be 0.88 or more, preferably 0.9 or more, and more preferably 0.93 or more. Preferably, 1-(b+c+d) that is the content of Ni may be 0.99 or less, or 0.95 or less. When the above range is satisfied, the amount of Ni sufficient to contribute to charging and discharging is secured, so that high capacity may be achieved.

In the lithium composite transition metal oxide of Chemical Formula 1, Co may be included in a content corresponding to b, that is, 0<b≤0.5. When the content of Co in the lithium composite transition metal oxide of Chemical Formula 1 exceeds 0.5, there is a potential concern in that the cost is increased. Considering the remarkable effect of improving capacity characteristics due to including Co, Co may be more specifically included in a content of 0.03≤b≤0.2.

In the lithium composite transition metal oxide of Chemical Formula 1, Mn may be included in a content corresponding to c, that is, a content of 0<c≤0.5. There is a potential concern in that when c in the lithium composite transition metal oxide of Chemical Formula 1 exceeds 0.5, the output characteristics and capacity characteristics of the battery may rather deteriorate, and the Mn may be included more specifically in a content of 0.01≤c≤0.2.

In the lithium composite transition metal oxide of Chemical Formula 1, Q may be a doping element included in the crystal structure of the lithium composite transition metal oxide, and Q may be included in a content corresponding to d, that is, 0≤d≤0.1. Q may be one or two or more selected among Na, K, Mg, Ca, Sr, Ni, Co, Ti, Al, Si, Sn, Mn, Cr, Fe, V and Zr, and for example, Q may be Al.

In the present disclosure, the single particle is a term used to distinguish single particles from positive electrode active material particles in the form of secondary particles formed by aggregation of tens to hundreds of primary particles found in the related art, and is a concept including a single particle composed of one primary particle and aggregate particles of 10 or less primary particles.

In an exemplary embodiment of the present disclosure, the single particles may have an average particle diameter (D50) of 1 um to 10 um, preferably 2 um to 7 um, and for example, 3 um to 7 µm.

Even though the single particles are formed as small particle diameters having an average particle diameter (D50) of approximately between 1 um and 10 µm, the particle strength may be excellent. For example, the positive electrode active material in the form of a single particle may have a particle strength of 100 MPa to 300 MPa when rolled with a force of 650 kgf/cm².

As a result, even though the positive electrode active material in the form of a single particle is rolled with a strong force of 650 kgf/cm², a phenomenon in which the number of particulates in the electrode due to cracking of the particles is increased is alleviated, thereby improving the service life characteristics of the battery.

The method of forming the lithium composite transition metal oxide in the form of a single particle is not particularly limited, but in general, single particles may be formed by increasing the firing temperature to achieve overfiring, and single particles may be prepared by a method of using an additive such as a grain growth promoter that helps overfiring or changing a starting material, and the like.

According to an additional exemplary embodiment of the present disclosure, in the lithium secondary battery according to the above-described exemplary embodiment, the lithium composite transition metal compound which includes nickel, cobalt and manganese, includes 80 mol% or more and less than 100 mol% of nickel among the metals except for lithium, and is in the form of a single particle in 100 parts by weight of the positive electrode active material included in the positive electrode active material layer may be included in an amount of 90 parts by weight to 100 parts by weight, for example, 100 parts by weight.

In an exemplary embodiment of the present disclosure, the positive electrode active material layer may further include a positive electrode active material in the form of secondary particles, but the content thereof may be 10 parts by weight or less in 100 parts by weight of the positive electrode active material included in the positive electrode active material layer. Accordingly, the above-described effects due to the presence of the positive electrode active material in the form of a single particle may be maximized. When the positive electrode active material in the form of the secondary particle is included, the components may be the same as those exemplified as the above-described single particle positive electrode active material, but may mean a form of aggregation of single particle forms.

In an exemplary embodiment of the present disclosure, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an additional exemplary embodiment of the present disclosure, the positive electrode active material layer according to the above-described exemplary embodiment may further include a positive electrode binder and a conductive material.

The positive electrode binder serves to improve the bonding between positive electrode active material particles and the adhesion between the positive electrode active material particles and the positive electrode current collector. As the positive electrode binder, those known in the art may be used, non-limiting examples thereof include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.1 parts by weight or more and 50 parts by weight or less, for example, preferably 0.3 parts by weight or more and 35 parts by weight or less, and more preferably 0.5 parts by weight or more and 20 parts by weight or less, based on 100 parts by weight of the positive electrode active material layer.

The conductive material included in the positive electrode active material layer is used to impart conductivity to the electrode, and can be used without particular limitation as long as the conductive material has electron conductivity without causing a chemical change in a battery. Specific examples thereof include graphite such as natural graphite or artificial graphite; a carbon-based material such as carbon black, acetylene black, Ketjen black, channel black, furnace black, lamp black, thermal black, and carbon fiber (CNT); metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Specifically, in an exemplary embodiment, the conductive material may include one or more of single-walled carbon nanotube (SWCNT); and multi-walled carbon nanotube (MWCNT). The conductive material may be included in an amount of 0.1 parts by weight or more and 2 parts by weight or less, for example, preferably 0.3 parts by weight or more and 1.5 parts by weight or less, and more preferably 0.5 parts by weight or more and 1.2 parts by weight or less, based on 100 parts by weight of the composition for a positive electrode active material layer.

In the present disclosure, the Si/C-based active material is a composite of Si and C, Si and C (graphite) peaks are observed in the XRD diffraction pattern, and the second phase Si/C may not be formed. The Si/C-based active material is distinguished from a silicon carbide insulator denoted as SiC.

According to the above-described exemplary embodiment of the present disclosure, the negative electrode active material layer includes a Si/C-based active material in an amount of 3 parts by weight or more based on 100 parts by weight of the entire negative electrode active material. The negative electrode active material layer includes a Si/C-based active material in an amount of 10 parts by weight or less based on 100 parts by weight of the entire negative electrode active material. According to an example, the negative electrode active material layer may include a Si/C-based active material in an amount of 5 parts by weight to 7 parts by weight, preferably 5.5 parts by weight to 6 parts by weight in 100 parts by weight of the entire negative electrode active material. By using the Si/C-based active material within the range described above, excellent battery characteristics may be exhibited in combination with the above-described positive electrode material. In particular, when the content is less than 3 parts by weight, the effect of using the Si/C-based active material cannot be sufficiently exhibited. In addition, since the Si/C-based active material has a higher capacity than the SiOx-based active material, it is difficult to balance the capacity with the positive electrode active material when used in excess, and in particular, when the content is more than 10 parts by weight, cycle characteristics may deteriorate due to the problem of expansion during charging and discharging.

The Si/C-based active material is a material with higher capacity and higher efficiency than silicon-based oxides, and even when a conductive material is not included, it is possible to show an excellent effect in terms of resistance compared to a negative electrode including silicon-based oxide and a conductive material. In addition, since the Si/C-based active material exhibits higher Si crystallinity than silicon based oxides, it is possible to exhibit an excellent effect during high output evaluation.

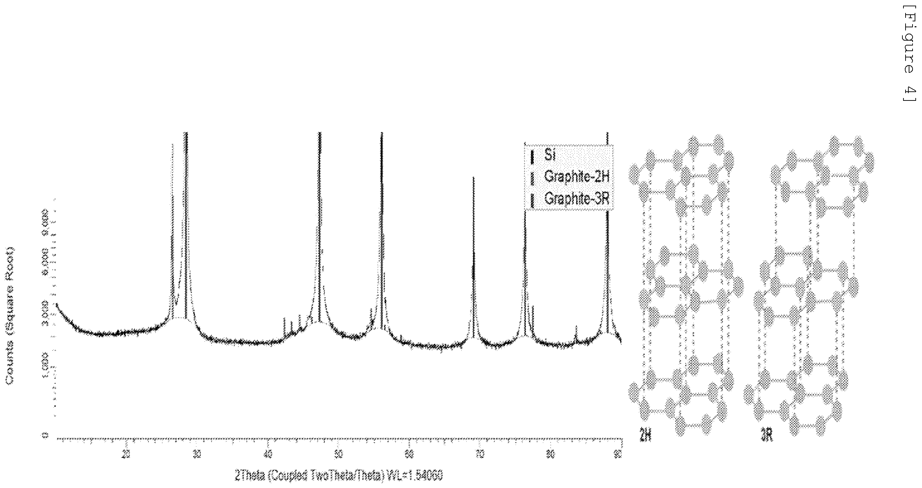

According to an exemplary embodiment, the Si/C-based active material includes Si having a cubic lattice space group Fd-3m, 2H-graphite having a hexagonal lattice space group p63/mmc, and 3R-graphite having a rhombohedral lattice space group R-3m in an XRD diffraction pattern. This XRD diffraction pattern is illustrated in FIG. 4. Furthermore, the Si/C-based active material does not have a SiC peak in the XRD diffraction pattern. This indicates that a Si/C composite is well formed without including a SiC compound having insulating properties. Si in the Si/C-based active material is included in an amount larger than C, and for example, Si may be included in an amount of 50 wt% or more, preferably 75 wt% or more, for example 80 wt% or more, or 90 wt% or more with respect to the total amount of Si and C.

According to FIG. 4, as a result of observing the FWHM (half width, the width of the peak at the middle height) of the Si peak, very sharp peak characteristics are shown, indicating that the crystallinity is good. Further, in FIG. 4, a part of the graphite component of the carbon material can be seen, and the SiC peak, which is a compound of Si and C, does not appear, so it can be seen that the Si/C composite is well formed. The peak intensity in FIG. 4 indicates the mass ratio of each element, and it can be seen that the Si content is predominant and the amount of C is relatively small.

According to an exemplary embodiment, the Si/C-based active material includes Si crystal grains and graphite or graphene sheets provided between the Si crystal grains. The graphite or graphene sheet provides a 3D network, which is an electron-conducting pathway in the Si/C-based active material. In such a structure, pores are present between the Si grain and the graphite or graphene sheet. Since the graphene is a thin plate obtained by exfoliating graphite, the graphene has a large volume per unit weight. Therefore, when graphene is included, various advantages such as formation of pores while enveloping Si particles with a high specific surface area may appear. If necessary, the Si/C-based active material may further include a lithium ion conductive elastic polymer in which at least part of the surface of the Si crystal grains is coated.

According to an exemplary embodiment, the Si/C-based active material has an a-axis lattice constant of Si of 5.431 Å.

According to an exemplary embodiment, the size of Si crystal grains included in the Si/C-based active material is 30 nm to 80 nm, may be, for example, 40 nm to 70 nm, preferably 50 nm to 60 nm, and may be 58 nm as a specific example.

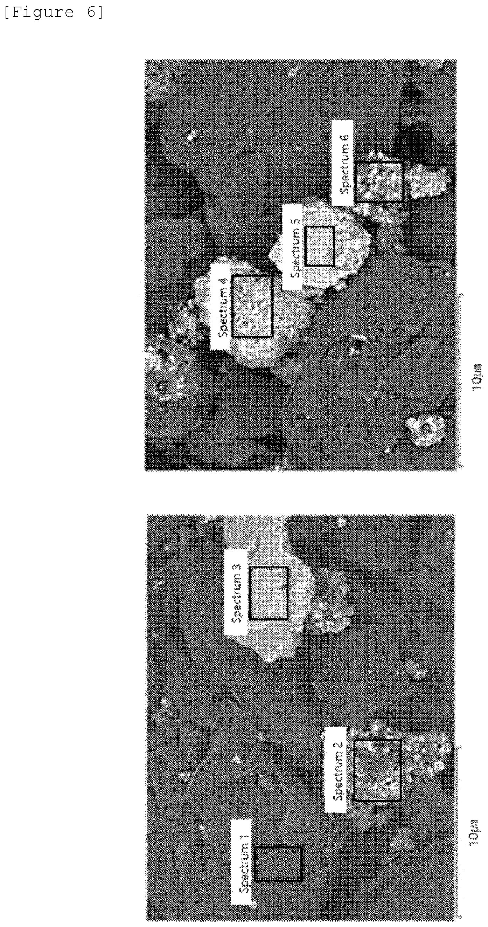

According to an exemplary embodiment, in 50% or more, preferably 60% or more of the particles of the Si/C-based active material, the Si content with respect to the total atom% of Si, C and O atoms measured on the surface is 85 atom% to 90 atom%, and the O content is 5 atm% or less, preferably 3.5 atm% or less. FIG. 6 is a set of photographs of Si/C-based active material particles, spectrum 1 corresponds to the comparison part as a region that is not Si/C active material particles, and spectra 2 to 6 show the surfaces in which the component ratios of the Si/C-based active material particles are analyzed. The composition on the surface of the particles labeled spectra 1 to 6 is shown in the following Table 1.

**[Table 1]**

| | C | O | Si | Total content (wt%) |
|---|---|---|---|---|
| spectrum 1 | 100.00 | - | - | 100.00 |
| spectrum 2 | 57.64 | 2.03 | 40.33 | 100.00 |
| spectrum 3 | 11.92 | 1.54 | 86.53 | 100.00 |
| spectrum 4 | 11.48 | 3.43 | 85.09 | 100.00 |
| spectrum 5 | 8.74 | 1.04 | 90.23 | 100.00 |
| spectrum 6 | 40.74 | 1.95 | 57.30 | 100.00 |

According to an additional exemplary embodiment of the present disclosure, in the lithium secondary battery according to the above-described exemplary embodiments, the negative electrode active material may further include a carbon-based active material.

In an exemplary embodiment of the present disclosure, the negative electrode active material may include a carbon-based active material, and specifically, the carbon-based material may be graphite. The graphite may be natural graphite, black lead graphite or a mixture thereof. Based on 100 parts by weight of the entire negative electrode active material included in the negative electrode active material layer, the carbon-based active material may be included in an amount of 90 parts by weight or more and 97 parts by weight or less.

In an exemplary embodiment of the present disclosure, the negative electrode active material in 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an additional exemplary embodiment of the present disclosure, in the lithium secondary battery according to the above-described exemplary embodiment, the negative electrode active material layer may further include a negative electrode binder in addition to a Si/C-based active material and a carbon-based active material.

The negative electrode binder serves to improve the bonding between negative electrode active material particles and the adhesion between the negative electrode active material particles and the negative electrode current collector. As the negative electrode binder, those known in the art may be used, and non-limiting examples thereof may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder may be included in an amount of 0.1 parts by weight or more and 50 parts by weight or less, for example, preferably 0.3 parts by weight or more and 35 parts by weight or less, and more preferably 0.5 parts by weight or more and 10 parts by weight or less, based on 100 parts by weight of the negative electrode active material layer.

The negative electrode active material layer may or may not include a conductive material. If included, the conductive material included in the negative electrode active material layer is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a carbon fluoride powder, an aluminum powder, and a nickel powder; a conductive whisker such as zinc oxide and potassium titanate; a conductive metal oxide such as titanium oxide; a conductive material such as polyphenylene derivatives, and the like. The content of the conductive material in the negative electrode active material layer may be 0.01 parts by weight to 30 parts by weight, preferably 0.03 parts by weight to 25 parts by weight, based on 100 parts by weight of the negative electrode active material layer.

In an exemplary embodiment of the present disclosure, the positive electrode may include a positive electrode current collector and a positive electrode active material layer formed on the positive electrode current collector and include the positive electrode active material.

The positive electrode current collector is not particularly limited as long as the collector has conductivity without causing a chemical change to a battery, and for example, it is possible to use stainless steel, aluminum, nickel, titanium, calcined carbon, or aluminum or stainless steel whose surface is treated with carbon, nickel, titanium, silver, and the like. Further, the positive electrode current collector may typically have a thickness of 1 um to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

In an exemplary embodiment of the present disclosure, the negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 um to 500 µm, the thickness of the current collector is not limited thereto.

In an exemplary embodiment of the present disclosure, the positive electrode and negative electrode active material layers may have a thickness of 20 um or more and 500 um or less. The thickness of the positive electrode active material layer may be 90% to 110%, for example, 95% to 1050 of the thickness of the negative electrode active material layer, and the thicknesses of the active material layers may be the same.

The positive electrode and the negative electrode may be manufactured by a method for manufacturing a positive electrode and a negative electrode in the related art, except that the aforementioned positive electrode and negative electrode active materials are used. Specifically, after a composition for forming an active material layer, which includes the aforementioned active material and, optionally, a binder and a conductive material is applied onto current collectors, the positive electrode and negative electrode may be manufactured by drying and rolling the current collectors. In this case, the types and contents of the positive and negative active materials, binders, and conductive materials are as described above. The solvent may be a solvent commonly used in the art, examples thereof include dimethyl sulfoxide (DMSO), isopropyl alcohol, N-methylpyrrolidone (NMP), acetone, water, or the like, and among them, any one thereof or a mixture of two or more thereof may be used. The amount of solvent used is sufficient as long as the solvent in the amount dissolves or disperses the active material, conductive material and binder in consideration of the application thickness and preparation yield of the slurry, and has a viscosity capable of exhibiting excellent thickness uniformity during subsequent application for manufacturing the positive electrode and the negative electrode. Alternatively, by another method, the positive electrode and the negative electrode may be manufactured by casting the composition for forming an active material layer on a separate support and then laminating a film obtained by performing peel-off from the support on a current collector.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of F-, Cl⁻, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂) ₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

A lithium secondary battery according to an exemplary embodiment of the present disclosure may be a cylindrical battery. The cylindrical battery means that the form of the battery itself, which includes an assembly including a positive electrode, a negative electrode, a separator and an electrolyte, is cylindrical, and specifically, may be composed of a cylindrical can, a battery assembly provided inside the cylindrical can, and a top cap.

An additional exemplary embodiment of the present invention provides a battery module including the above-described cylindrical battery as a unit cell and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Since the lithium secondary battery according to exemplary embodiments of the present invention stably exhibits excellent discharge capacity, output characteristics, and cycle performance, the lithium secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### <Example 1>

An aluminum foil having a thickness of 30 um was coated with a composition for forming a positive electrode active material layer, including 98.04 parts by weight of a lithium composite transition metal compound which has contents of 93.3 mol% of Ni, 4.9 mol% of Co, and 1.8 mol% of Mn among metals except for lithium as a positive electrode active material and is in the form of a single particle, 1 part by weight of PVDF as a binder, and a CNT pre-dispersion including 0.8 parts by weight of CNT as a conductive material and 0.16 parts by weight of a dispersing agent, based on 100 parts by weight of the positive electrode active material layer, so as to have a thickness of 103 um in a dry state, and then the coated aluminum foil was dried to manufacture a positive electrode.

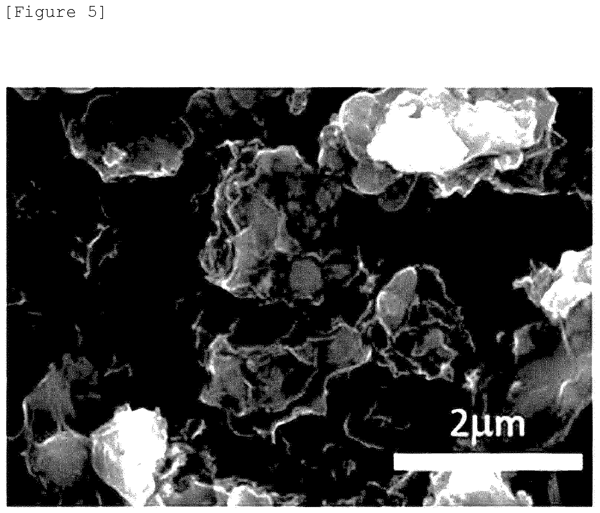

A copper foil having a thickness of 15 um was coated with a composition for forming a negative electrode active material, including 97.7 parts by weight of artificial graphite and natural graphite (7 : 3 weight ratio, 94.5 parts by weight based on 100 parts by weight of a negative electrode active material) as a negative electrode active material, and a Si/C-based active material (5.5 parts by weight based on 100 parts by weight of the negative electrode active material), 1.15 parts by weight of styrene-butadiene rubber (SBR) as a binder and 1 part by weight of carboxymethyl cellulose (CMC) and further including a CNT pre-dispersion including 0.09 parts by weight of a dispersing agent and 0.06 parts by weight of a single-walled CNT, based on 100 parts by weight of the negative electrode active material layer so as to have a thickness of 86 um in a dry state, and then the coated copper foil was dried to manufacture a negative electrode. The Si/C-based active material is a Si/C composite with a capacity of 2,750 mAh/g manufactured using Si and graphene, and it was confirmed by the XRD diffraction pattern in FIG. 4 and the SEM photograph in FIG. 5 that a Si/C composite was formed.

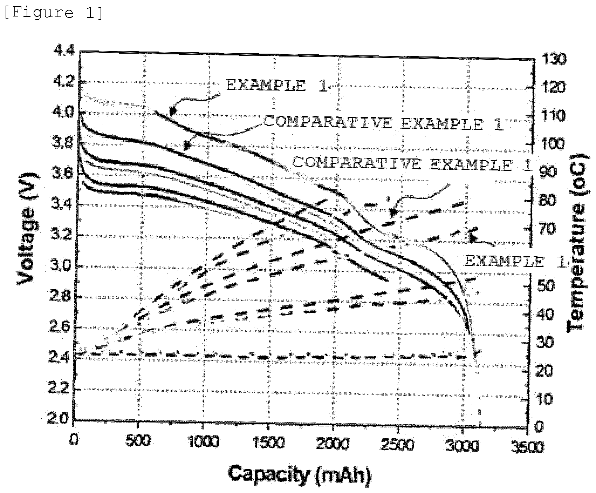

The positive electrode and negative electrode were stacked with a separator therebetween, and an electrolyte solution (1.4 M LiPF₆, ethylene carbonate (EC), ethylmethyl carbonate (EMC)/dimethyl carbonate (DMC) = 20/5/75 (vol%), succinonitrile (SN) 1% and fluoroethylene carbonate (FEC) 10%) was injected to manufacture a battery. After the manufactured battery was charged to 4.2 V at 3 A (50 mA cut), the battery was discharged to 2 V at 0.2 C, 10 A, 20 A and 30 A, respectively, or at 80°C cut. The charge and discharge characteristics of the battery are shown in FIG. 1 and Table 2.

### <Comparative Example 1>

A battery was manufactured in the same manner as in Example 1, except that a lithium composite transition metal compound, which has contents of 89.1 mol% of Ni, 6.6 mol% of Co, and 4.3 mol% of Mn among the metals except for lithium as a positive electrode active material and is in the form of secondary particles, was used. The charge and discharge characteristics of the battery were measured in the same manner as in Example 1, and the results are shown in FIG.1 and Table 2.

**[Table 2]**

| Charging conditions | Discharging conditions | Comparative Example 1 | | Example 1 | |
|---|---|---|---|---|---|
| | | Capacity (mAh) | Temperature (°C) | Capacity (mAh) | Temperature (°C) |
| 3 A charging | 0.2 C | 3104 | 26.6 | 3105 | 26.3 |
| | 10 A | 3090 | 50.7 | 3098 | 47.4 |
| | 20 A | 3119 | 75.9 | 3122 | 70.4 |
| | 30 A | 2124 | 80.1 | 2400 | 80.1 |
| | Capacity% (vs. 0.2 C) during charge at 30 A | 68.4 | - | 77.2 | - |

FIG. 1 and Table 2 show the temperature and capacity-voltage curves during discharge at each corresponding current after charge at 3A. The battery was set to automatically stop working when the battery temperature reached 80°C. A battery with good output may deliver the capacity as much as possible before the battery temperature reaches 80°C. Batteries with good output have low resistance to charge transfer during discharge at high current, which is related to battery heat generation temperature. Except for discharge at 30 A, all the battery heat generation temperatures does not rise to 80°C, so that batteries can be all discharged, but in discharge at 30 A, the temperature of the battery reaches 80°C before discharging, so that the battery is not discharged 100%, and in consideration of the discharge capacity before the temperature cut, it may be interpreted that Example 1 shows better output characteristics.

### <Example 2>

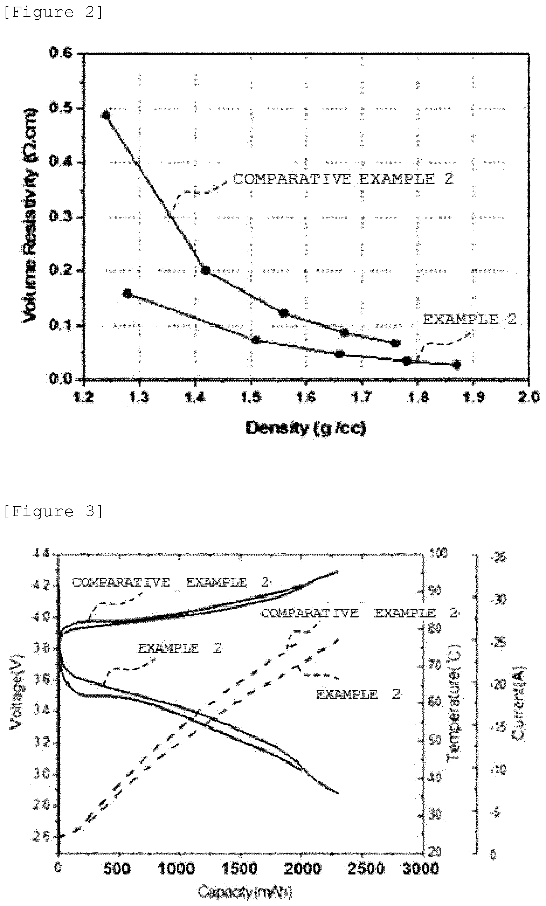

An experiment was performed in the same manner as in Example 1, except that 6 parts by weight of the Si/C-based active material was used instead of 5.5 parts by weight of the Si/C-based active material in the negative electrode active material and the single-walled CNT as a conductive material was not used. The powder resistance of the prepared composition for forming a negative electrode active material layer is illustrated in FIG. 2. Further, the charge and discharge characteristics of the manufactured battery are shown in FIG. 3 and Table 3.

### <Comparative Example 2>

An experiment was performed in the same manner as in Example 1, except that 6 parts by weight of SiOx (x<2) were used instead of 5.5 parts by weight of the Si/C-based active material in the negative electrode active material.

The powder resistance of compositions for forming a negative electrode active material layer, prepared in Example 2 and Comparative Example 2, is illustrated in FIG. 2. According to FIG. 2, it can be confirmed that the powder resistance of the composition for forming a negative electrode active material layer in Example 2 including the Si/C-based active material is lower than that in Comparative Example 2 using SiOx as the negative electrode active material. Although Example 2 does not include a conductive material, the powder resistance is lower than that of Comparative Example 2, so that it can be seen that there is a large difference in powder resistance depending on the type of negative electrode active material. Here, the powder resistance is determined by a method of measuring the resistance at each density when a powder is pressed by allowing only the solid content to remain by solidifying the slurry after evaluating the solvent, disintegrating the solid to make a powder form, containing the powder in a vessel, and pressing the powder at a weight of 400 /800 /1200/ 1600/ 2000 kgf.

Further, the charge and discharge characteristics of the batteries manufactured in Example 2 and Comparative Example 2 are shown in FIG. 3 and Table 3.

**[Table 3]**

| Classification | Constant power (CP) rate 95 W | |
|---|---|---|
| | 2.65 V or 77°C cut | |
| | Comparative Example 2 | Example 2 |
| Discharge capacity (mAh) | 1999 | 2304 |
| Run Time (min) | 4.23 | 4.87 |
| Voltage (V) | 3.02 | 2.87 |
| Current (A) | 31.4 | 33.0 |
| Temperature (°C) | 77.3 | 77.1 |

The CP rate in Table 3 is a test of measuring charge/discharge characteristics under a constant power. In this test, the output, that is, [voltage x current], is constant, so that the voltage drops and the current increases while the discharge continues after the battery is fully discharged. In the test, the lower limit of the voltage when the battery is fully discharged is set to 2.65 V, and the discharge current becomes the maximum current at the lower limit of the voltage. In addition, in the test, the battery was designed to stop working at a temperature of 77°C. That is, the test is a condition under which the work is stopped when the battery is fully charged, and thus, the voltage reaches 2.65 V or the temperature reaches 77°C. When the test results under the above conditions are examined, it can be seen that Example 2 has a long working time, a large discharge capacity, and a lower voltage. This can be interpreted that more capacity may be produced before the temperature reaches 77°C, and it can be determined that the output is good.

## Claims

1. A lithium secondary battery comprising:
a positive electrode;
a negative electrode;
a separator provided between the positive electrode and the negative electrode; and
an electrolyte,
wherein the positive electrode includes a positive electrode current collector and a positive electrode active material layer provided on the positive electrode current collector, and the negative electrode includes a negative electrode current collector and a negative electrode active material layer provided on the negative electrode current collector, and
the positive electrode active material layer includes a positive electrode active material including a lithium composite transition metal compound including nickel, cobalt and manganese, the nickel in an amount of 80 mol% or more and less than 100 mol% among the transition metals except for lithium and is in the form of a single particle, and
the negative electrode active material layer includes a Si/C-based active material in an amount of 3 parts by weight or more based on 100 parts by weight of the negative electrode active material.

2. The lithium secondary battery of claim 1, wherein the negative electrode active material layer comprises a Si/C-based active material in an amount of 10 parts by weight or less based on 100 parts by weight of the negative electrode active material.

3. The lithium secondary battery of claim 1, wherein the Si/C-based active material has a capacity of 1,500 mAh/g to 3,000 mAh/g.

4. The lithium secondary battery of claim 1, wherein the lithium composite transition metal compound including nickel, cobalt and manganese, comprises 80 mol% or more and less than 100 mol% of nickel among the transition metals except for lithium, and is in the form of a single particle in an amount of 90 parts by weight to 100 parts by weight with respect to 100 parts by weight of the positive electrode active material.

5. The lithium secondary battery of claim 1, wherein the positive electrode active material layer includes a positive electrode binder and a conductive material.

6. The lithium secondary battery of claim 1, wherein the negative electrode active material layer includes a carbon-based active material.

7. The lithium secondary battery of claim 1, wherein the Si/C-based active material does not have a SiC peak in an XRD diffraction pattern, and comprises Si in an amount of 90 wt% or more with respect to a total amount of Si and C.

8. The lithium secondary battery of claim 1, wherein the lithium secondary battery is a cylindrical battery.

9. A battery module comprising the lithium secondary battery according to claim 1.

10. A battery pack comprising the battery module of claim 9.
